# EUROPÄISCHE PATENTSCHRIFT

(11) **EP 3 046 700 B1**
(45) Veröffentlichungstag und Bekanntmachung des Hinweises auf die Patenterteilung: **10.05.2017**
(21) Anmeldenummer: 10717492.2
(22) Anmeldetag: 08.03.2010
(51) Int. Cl.: B22D 41/08, B22D 41/22, B22D 43/00, C21C 5/52, F27B 3/08, F27B 3/19, F27D 3/15, F27D 3/14

(54) **ELEKTROLICHTBOGENOFEN MIT MEHREREN BODENABSTICHÖFFNUNGEN**
ELECTRIC ARC FURNACE COMPRISING A PLURALITY OF BOTTOM TAPHOLE OPENINGS
FOUR À ARC ÉLECTRIQUE COMPRENANT PLUSIEURS ORIFICES DE COULÉE PAR LE FOND

(30) Priorität: 18.03.2009 DE 102009013869
(43) Veröffentlichungstag der Anmeldung: 27.07.2016
(73) Patentinhaber: SMS group GmbH, 40237 Düsseldorf (DE)
(72) Erfinder: BADER, Jan, 46519 Alpen (DE); NÖRTHEMANN, Ralf, 45549 Sprockhövel (DE); STARKE, Peter, 47228 Duisburg (DE); SCHÖRING, Matthias, 96049 Bamberg (DE); KAUNE, Holger, 31174 Schellerten (DE); ROTENSTEIN, Thomas, 38268 Lengede (DE)
(74) Vertreter: Klüppel, Walter
(86) Internationale Anmeldenummer: PCT/DE2010/000264
(87) Internationale Veröffentlichungsnummer: WO 2010/105595

(56) Entgegenhaltungen:
- DE-A1- 2 019 717
- DE-U1- 20 121 645

## Beschreibung

Die Erfindung betrifft einen Elektrolichtbogenofen, mit einem verschließbaren Bodenabstich für die Metallschmelze.
Bei metallurgischen Öfen, wie Elektrolichtbogenöfen, sind getrennte Abstichöffnungen für die Schlacke einerseits und für die Metallschmelze andererseits vorgesehen. Elektrolichtbogenöfen können kippbar oder nicht kippbar sein, wobei die Anordnung der hier nur interessierenden Abstichöffnung für die Metallschmelze - je nach Bauart - zentrisch oder exzentrisch im Gefäßboden angeordnet sein kann.
So ist beispielsweise aus der DE 195 45 831 C2 ein Elektrolichtbogenofen bekannt, bei dem sich die Abstichöffnung in einer Abgußschnauze befinden. Zum Abstich wird das Gefäß leicht gekippt.
Ebenfalls exzentrisch, und zwar in einem Erker, ist die Abstichöffnung nach der WO 03/029499 A1 angeordnet, wobei hier zwischen dem eigentlichen Ofengefäß und dem Erker eine siphonartiger Verbindungskanal vorgesehen ist. Darüber hinaus ist gemäß diesem Dokument ein zentraler Bodenabstich für das vollständige Entleeren des Ofengefäßes vorgesehen.

Aus der EP 1 174 671 A2 ist ein metallurgisches Gefäß, insbesondere eine Elektrolichtbogenofen bekannt, das eine Abstichöffnung aufweist, wobei aber im Anschluß an diese Öffnung die Metallschmelze durch zwei gesonderte Kanäle abgeführt wird. Aus der DE 2019717 ist eine Gießpfanne mit zwei unabhängig voneinander verschließbaren Bodenabstichöffnungen bekannt, wodurch die Stillstandzeiten der Gießpfanne reduziert werden können. In der Praxis hat sich gezeigt, dass bei allen diesen Abstichöffnungsanordnungen ein Mitreißen von Schlackenteilchen nicht zuverlässig vermieden werden kann, weil im Bereich der Abstichöffnung der sog. Vortex-Effekt auftritt.
Diese besondere Strömungs- und Wirbelbildung soll beispielsweise nach der WO 02/076658 A1 dadurch verhindert werden, dass unterschiedlich ausgebildete Hauben oder Kappen mit Durchtrittsöffnungen über die Abstichöffnung gesetzt werden.
Unabhängig von dieser nicht erwünschten Strömungsbildung tritt bei Abstichöffnungen der Nachteil auf, dass die Standzeiten oder die Lebensdauer des die Abstichöffnung bildenden feuerfesten Materials begrenzt ist und das der Verschleiß wiederum zu Problemen beim gewünschten oder eventuell notwendigen Unterbrechen des Abstichs führen kann, weil die Verschlüsse nicht mehr ausreichend abdichten.
Während die Behandlungszeiten für die Schmelze im Gefäß schon erheblich reduziert werden konnten, und zwar durch eine Reduzierung der metallurgischen Arbeiten im Gefäß, durch die Erhöhung der zugeführten elektrischen Energie, der Maximierung der chemischen Energie oder durch besondere Fahrweisen, wie die Schaumschlackenfahrweise, haben die Nebenzeiten noch große Bedeutung.
Diese Nebenzeiten entstehen bei dem vorher erwähnten Verschleiß durch die Notwendigkeit den Abstichlochstein zu erneuern oder oft auch dadurch, dass sich die Abstichöffnungen durch den nach einem Abstich eingegebenen Sand so fest zugesetzt haben, dass erst ein Ausbrennen erfolgen muss.
Dieses Ausbrennen ist nicht nur aufwändig sondern auch sehr gefährlich, weil es von unten, also an der Unterseite des Gefäßes erfolgen muss, wobei jederzeit mit einem Ausfließen der Metallschmelze zu rechnen ist.
Der Erfindung liegt daher die Aufgabe zugrunde, das metallurgische Gefäß so auszubilden, dass schnellere Abstichzeiten, längere Standzeiten und Wartungsintervalle erreichbar sind, und darüber hinaus auch die Strömungsverhältnisse im Bereich der Abstichöffnung verbessert werden können.
Gelöst wird diese Aufgabe erfindungsgemäß bei einem Elektrolichtbogenofen, mit einem verschließbaren Bodenabstich für die Metallschmelze.
dadurch, dass mindestens zwei Abstichöffnungen nahe beieinander vorgesehen sind, die unabhängig voneinander verschließbar sind, wobei der Mittenabstand zwischen den Abstichöffnungen etwa dem vier - fachen, mindestens jedoch dem doppelten Durchmesser der Abstichöffnung entspricht.

Vorzugsweise sind weiterhin die Abstichöffnungen durch Schieber verschließbar. Die vorstehend angegebenen Merkmalskombination ergibt eine ganze Reihe von erheblichen Vorteilen.

Zunächst einmal wird durch die Anordnung von mindestens zwei Abstichöffnungen die Abstichzeit verringert, weil eine größere Metallmenge durchgesetzt werden kann.

In diesem Zusammenhang sei erwähnt, dass die durchsetzbare Metallmenge nicht etwa durch eine Vergrößerung der Abstichöffnung auch erreicht werden kann.
Hierbei würden sich einerseits erhebliche Standzeitprobleme ergeben, sowie Probleme einen dichten Verschluss der Öffnung zu erreichen. Andererseits würde sich die Menge an mitgerissener Schlacke vergrößern, was natürlich unerwünscht wäre.

Da erfindungsgemäß die Abstichöffnungen getrennt verschließbar sind, also unabhängig voneinander geöffnet und geschlossen werden können, kann für den Fall, dass eine der Abstichöffnungen nicht betriebsbereit ist, die verbleibende Abstichöffnung benutzt werden. Natürlich kann auch mal mit der einen oder der anderen Abstichöffnung gearbeitet werden, so dass längere Standzeiten oder Wartungsintervalle erzielt werden.

Schließlich ergibt sich aber noch ein sehr wesentlicher Vorteil.
Wie eingangs erwähnt tritt im Bereich einer Abstichöffnung üblicherweise der Vortex-Effekt auf, der zu Verunreinigungen der Metallschmelze durch Schlackenreste führt.

Überraschend hat sich nun gezeigt, dass durch die Anordnung von zwei Abstichöffnungen in einem bestimmten Abstand zueinander, sich diese Effekte gegenseitig nahezu aufheben können, so dass verbesserte Reinheitsgrade erzielbar sind, ohne dass es zusätzlicher An- oder Einbauelemente bedarf, die natürlich auch einem erheblichen Verschleiß unterliegen und damit wiederum zu unerwünschten Erhöhungen der Nebenzeiten für deren Austausch führen würden.

Die Erfindung soll nachfolgend mit Bezug auf die Zeichnungen erläutert werden.
Dabei zeigt:
Fig. 1 schematisch den Boden eines metallurgischen Gefäßes, insbesondere eines Elektrolichtbogenofen mit zwei Abstichöffnungen von oben und von unten gesehen und
Fig. 2 eine entsprechende Ansicht, mit einem verschließbaren Bodenabstich für die Metallschmelze, jedoch mit drei Abstichöffnungen.

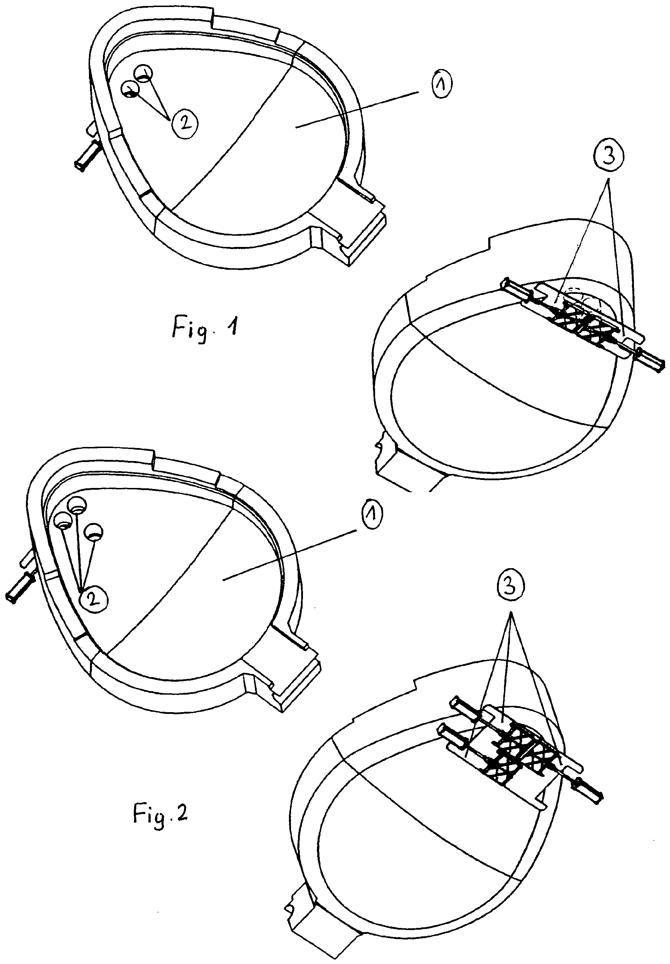

Der Boden des Gefäßes 1 weist in der Figur 1 zwei nebeneinander angeordnete Abstichöffnungen 2 auf, wobei allerdings aus zeichentechnischen Gründen diese hier eng beieinander liegend dargestellt worden sind. Tatsächlich sollte der Mittenabstand dem vierfachen des Durchmessers entsprechen.

Bei der Ansicht der Unterseite ist erkennbar dass dort zwei unabhängige Schieber 3 zur Freigabe bzw. zum schließen der Abstichöffnungen 2 vorgesehen sind.

In der Figur 2 ist ebenfalls beispielhaft eine Ausführung mit drei Abstichöffnungen dargestellt.

## Patentansprüche

1. Elektrolichtbogenofen, mit einem verschließbaren Bodenabstich für die Metallschmelze,
**dadurch gekennzeichnet,**
**dass** mindestens zwei Abstichöffnungen nahe beieinander vorgesehen sind, die unabhängig voneinander verschließbar sind, wobei
der Mittenabstand zwischen den Abstichöffnungen etwa dem vier - fachen, mindestens jedoch dem doppelten Durchmesser der Abstichöffnung entspricht.

2. Elektrolichtbogenofen nach Anspruch 1,
**dadurch gekennzeichnet,**
**dass** die Abstichöffnungen gleiche oder ähnliche Durchmesser aufweisen.

3. Elektrolichtbogenofen nach den Ansprüchen 1 und 2,
**dadurch gekennzeichnet,**
**dass** die Abstichöffnungen durch Schieber verschließbar sind.

## Claims

1. Electric arc furnace with a closable bottom tap for the metal melt, **characterised in that** at least two tap openings, which are closable independently of one another, are provided closely adjacent to one another, wherein the centre spacing between the tap openings corresponds with approximately four times, but at least twice, the diameter of the tap opening.

2. Electric arc furnace according to claim 1, **characterised in that** the tap openings have the same diameter or similar diameters.

3. Electric arc furnace according to claims 1 and 2, **characterised in that** the tap openings are closable by sliders.

## Revendications

1. Four électrique à arc comprenant une coulée par le fond pour le métal liquide, qui peut être fermée, **caractérisé en ce qu'**on prévoit au moins deux ouvertures de coulée à proximité l'une de l'autre, qui peuvent être fermées indépendamment l'une de l'autre, la distance moyenne entre les ouvertures de coulée correspondant approximativement à quatre fois le diamètre de l'ouverture de coulée, mais au moins au double dudit diamètre.

2. Four électrique à arc selon la revendication 1, **caractérisé en ce que** les ouvertures de coulée présentent des diamètres identiques ou analogues.

3. Four électrique à arc selon les revendications 1 et 2, **caractérisé en ce que** les ouvertures de coulée peuvent être fermées à l'aide de tiroirs.
